# EUROPEAN PATENT SPECIFICATION

(11) **EP 1 060 654 B1**
(45) Date of publication and mention of the grant of the patent: **04.02.2004**
(21) Application number: 00660110.8
(22) Date of filing: 14.06.2000
(51) Int. Cl.: A01G 7/04

(54) **Light fitting for greenhouse**
BELEUCHTUNGSGERÄTE FUR GEWÄCHSHÄUSER
Dispositif d'éclairage pour serre

(30) Priority: 14.06.1999 FI 991363
(43) Date of publication of application: 20.12.2000
(73) Proprietor: Flemming, Ismo, 23500 Uusikaupunki (FI)
(72) Inventor: Flemming, Ismo, 23500 Uusikaupunki (FI)
(74) Representative: Pirhonen, Kari Lennart

(56) References cited:
- NL-A- 8 400 357
- US-A- 4 699 448
- US-A- 4 992 917
- DATABASE WPI Section PQ, Week 197732 Derwent Publications Ltd., London, GB; Class P13, AN 1977-G6496Y XP002148688 & SU 532 363 A (PHYS TECH INST), 5 December 1976 (1976-12-05)
- DATABASE WPI Section PQ, Week 199613 Derwent Publications Ltd., London, GB; Class P13, AN 1996-127320 XP002148689 & RU 2 038 746 C (GIPRONISELPROM RES INST PATENT ENTERPR), 9 July 1995 (1995-07-09)

## Description

The object of the invention is a greenhouse illuminator, which comprises a bulb or lamp and at least one reflector for reflecting rays of light from the lamp obliquely to the side, mainly onto plants situated further away from the illuminator, so that the plants beneath the illuminator are illuminated as uniformly as possible.

In known greenhouses, the illuminators are usually placed above the plants. Because the number of illuminators is limited for practical reasons, they are placed at some distance from one another. This gives rise to the problem that not all plants receive an equal amount of light. It is clear that the plants directly below the illuminator receive plenty of light, as they are close to it. Plants located further away from the illuminator, on the other hand, do not receive nearly as much light.

Attempts have been made to solve this problem by making illuminators that produce an optimally uniform field of light. However, this has not worked when the illuminators are placed further apart. This has made it necessary to use a large number of illuminators relatively close to each other.

German patent specification 844434 presents a combined illuminator solution, in which one illuminator includes three bulbs or lamps and three different reflectors. Two of these lamps each have their own parabolic reflectors, which direct the light of these lamps obliquely to the side and thus as far as possible. The third lamp or bulb is placed between the two above-mentioned lamps and underneath them so that it illuminates the area directly underneath the combined illuminator. However, as less light is needed at a closer range, this third lamp is of a lower capacity than the lamps illuminating a wider range. But such a combined illuminator is extremely complex and susceptible to disturbances. It is also difficult to adjust so that the lighting capacity remains at the desired level everywhere.

The purpose of this invention is to present a new greenhouse illuminator, which does not have the above-mentioned problems. The greenhouse illuminator relating to the invention is characterised in that
- the greenhouse illuminator has at least one upper reflector and at least one lower reflector which are designed in such a way that they reflect the rays of light from the lamp obliquely to the side, mainly onto plants located further away from the illuminator,
- the upper and lower reflectors are designed in such a way that, in an elevation view, they form parabolas opening to the sides, which reflect the rays of light from the lamp situated at the common focal point of both parabolas, mainly to the sides at a downward angle from the horizontal, which angle is most advantageously approximately 15°,
- and the lower reflector of the greenhouse illuminator has holes or apertures which allow diffused light to pass through it to the area below the illuminator and to its surroundings.

Since the intensity of light attenuates markedly with increasing distance, according to the invention most of the light from the illuminator is directed to plants situated further away from the illuminator. Thus the illuminator's field of light is uniform and all plants receive an equal amount of light. The plants situated near the illuminator receive the same amount of light in the form of diffused light.

According to one preferred embodiment of the greenhouse illuminator relating to the invention, the upper reflector of the greenhouse illuminator is a satin-finished mirror.

According to a second preferred embodiment of the greenhouse illuminator relating to the invention, the lower reflector of the greenhouse illuminator is a silvered mirror.

According to a third preferred embodiment of the greenhouse illuminator relating to the invention, the holes at the outer edges of the lower reflector are larger than the holes in the central part of the lower reflector near the lamp.

According to a fourth preferred embodiment of the greenhouse illuminator relating to the invention, the greenhouse illuminator incorporates, on both sides of the lamp, side reflectors which reflect the rays of light directed to the sides of the lamp obliquely downwards to the opposite side of the lamp.

According to yet another preferred embodiment, the upper reflector, lower reflector and side reflectors of the greenhouse illuminator are attached to the body of the illuminator.

In the following, the invention is described by an example with reference to the accompanying drawings, in which
- Figure 1: shows in schematic form an elevation view of a greenhouse illuminator relating to the invention
- Figure 2: shows the greenhouse illuminator seen from the end
- Figure 3: shows the greenhouse illuminator seen from the side and partly cut along the line II-III in figure 2.

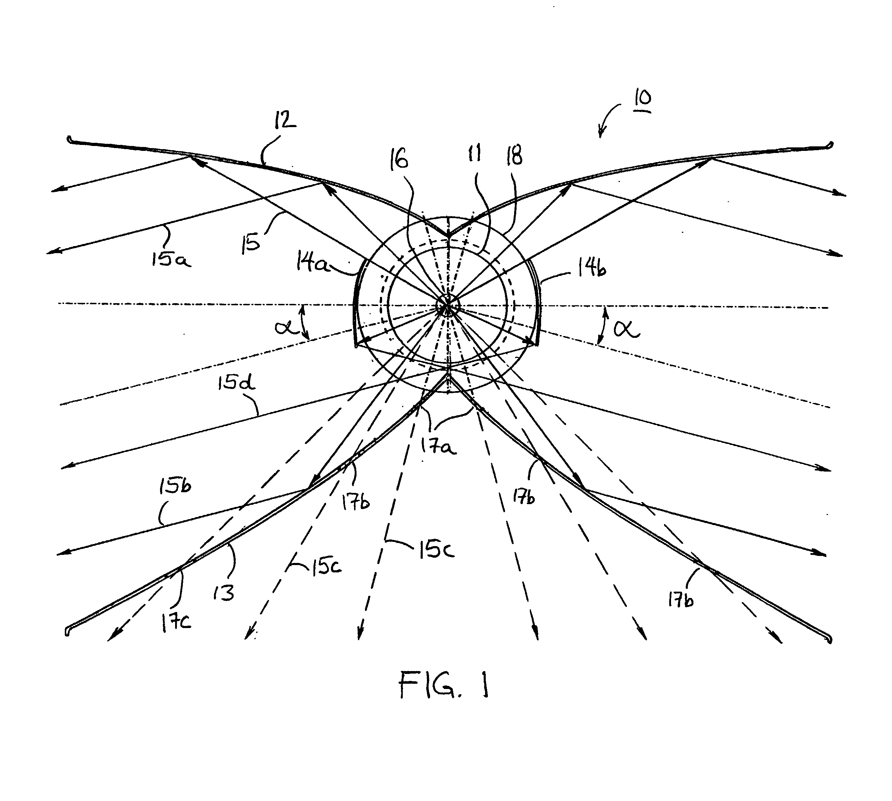

Figure 1 shows a schematic view of the main parts and functions of the greenhouse illuminator 10 relating to the invention. The illuminator 10 comprises a bulb or lamp 11, which is, for instance, a high pressure sodium lamp or a metal halide lamp, an upper reflector 12, a lower reflector 13 and side reflectors 14a and 14b. Figure 1 shows rays of light 15 drawn from the centre 16 of the lamp 11, the path and reflecting of the rays of light at different points of the illuminator 10 being shown by reference numbers 15a-15d.

In the elevation view of figure 1, the upper reflector 12 and the lower reflector 13 form parabolas opening on both sides of the illuminator 10, whose focal point is the centre 16 of the lamp 11. The axes of the parabolas of the reflectors 12 and 13 are in such a position that the rays of light from the lamp 11 are reflected to the sides parallel to one another, obliquely at a downward angle α in relation to the horizontal. Most advantageously, the rays of light 15a reflecting from the upper reflector 12 and the rays of light 15b reflecting from the lower reflector 13 are at an angle α=15° down from the horizontal, in which position they are mainly directed towards the plants situated further away from the illuminator 10.

Some of the light from the lamp 11 of the illuminator 10 meets the plants directly underneath as diffused light through the holes or apertures 17a-17c in the lower reflector 13. In the figure, these rays of light are indicated by reference number 15c. The apertures 17a-17c are of varying sizes so that the apertures 17c along the edges of the lower reflector 13 are larger than the apertures 17a in the central part of the lower reflector 13 near the lamp 11. The purpose of this arrangement is also to direct a larger portion of the light to plants situated further away from the illuminator 10 than to plants situated near the illuminator.

Because the parabolas comprising the upper reflector 12 and the lower reflector 13 open up on both sides of the illuminator 10, some of the light of the lamp 11 could be wasted in the horizontal direction and also slightly above it. In order to direct also these rays of light 15 onto the plants below the illuminator 10, the illuminator 10 has, on both sides of the lamp 11, side reflectors 14a and 14b. The side reflectors 14a and 14b are slightly curved and they reflect the rays of light directed to the sides from the lamp 11 to the opposite side obliquely downwards. In the figure, these reflected rays of light are indicated by the reference number 15d, and they are mainly parallel to the rays of light 15a and 15b reflected from the upper reflector 12 and the lower reflector 13, i.e. in this sample case, at an angle of 15° down from the horizontal. Using the reflectors 12-14, all rays of light 15 from the lamp 11 in the illuminator 10 can in principle be directed in the desired way.

The bulb or lamp used in the illuminator 10 may, for instance, be a high pressure sodium lamp or a metal halide lamp. The mirror of the upper reflector 12 of the illuminator 10 is satin-finished, which causes it to diffuse the reflected rays of light 15a slightly, thus providing a more uniform distribution of light. The lower reflector 13, on the other hand, is a silvered mirror. The reflectors 12, 13 and 14 are attached to the body 18 of the illuminator 10.

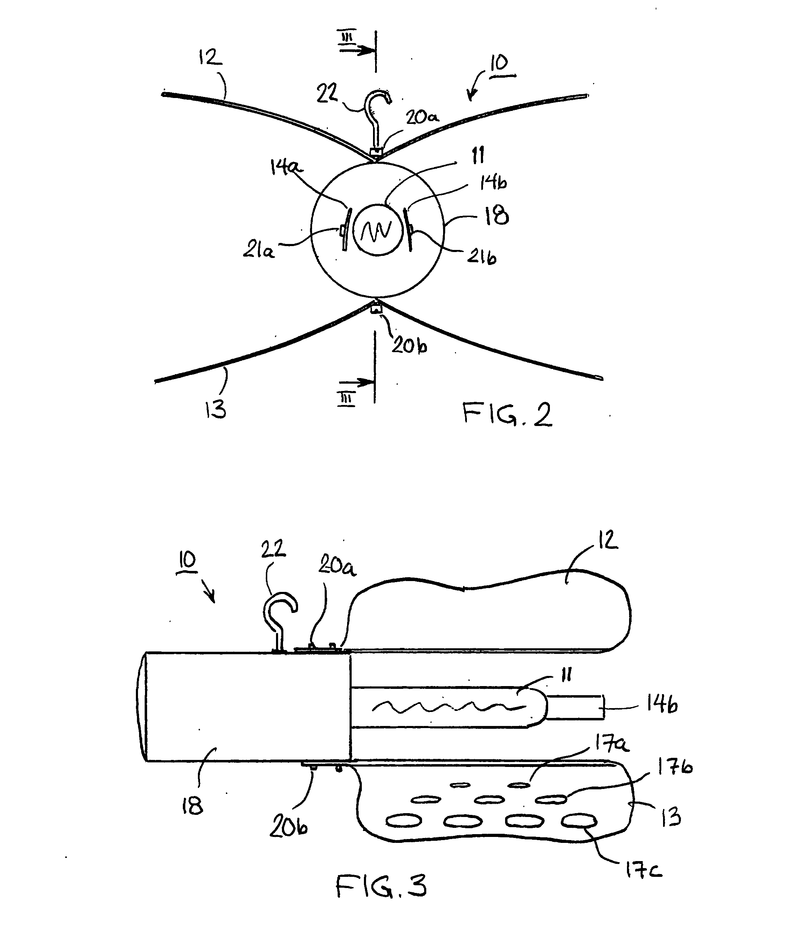

Figure 2 shows the structure of a greenhouse illuminator 10 relating to the invention seen from the end of the illuminator. The body 18 of the illuminator 10 is, in this example, an aluminium cylinder, which houses, in addition to a bulb or lamp 11, also the electric components needed in an illuminator, such as an ignitor. The upper reflector 12 and the lower reflector 13 are attached to the top and bottom of the body 18 with screws 20a and 20b. The side reflectors 14a and 14b are inserted into the notches 21a and 21b at the end of the body 18. In addition, a fastening hook 22 has been attached to the top of the body 18 of the illuminator 10.

Figure 3 shows a side view of the greenhouse illuminator 10 in figure 2. For the sake of illustration, the illuminator 10 is shown partly cut. Figure 3 shows that the bulb or lamp 11 of the greenhouse illuminator 10 is placed at the end of a cylindrical aluminium body 18. On both sides of the lamp 11, there are side reflectors 14, of which, for the sake of illustration, only one is shown in figure 3, i.e. the side reflector 14b behind the lamp 11. The upper reflector 12 and the lower reflector 13 are attached to the top and bottom of the body cylinder 18 with screws 20a and 20b. In addition, there is a fastening hook 22 at the top of the body 18 of the illuminator 10.

Figure 3 also clearly illustrates the arrangement of the holes or apertures 17a-17c on the lower reflector 13 of the greenhouse illuminator 10. The apertures 17a-17c are of varying sizes so that the apertures 17c along the edges of the lower reflector 13, i.e. the ones situated lower in figure 3, are larger than the apertures 17a in the central part of the lower reflector 13 near the lamp 11. The sample structure in figure 3 comprises three rows of round apertures 17 of various sizes. The benefit achieved by this arrangement is that a larger portion of the light is directed to plants situated further away from the illuminator 10 than to plants situated near the illuminator. However, because the intensity of light decreases markedly as a function of distance, by directing most of the light further away by using a greenhouse illuminator 10 relating to the invention, it is possible to achieve lighting of as uniform intensity as possible underneath the illuminator.

It is obvious to a person skilled in the art that the different embodiments of the invention may vary within the scope of the claims presented below.

## Claims

1. A greenhouse illuminator (10), which comprises a bulb or lamp (11) and at least one reflector (12, 13, 14) for reflecting rays of light from the lamp obliquely to the side, mainly onto plants situated further away from the illuminator, so that the plants beneath the illuminator are illuminated as uniformly as possible, **characterised in that**
- the greenhouse illuminator (10) has at least one upper reflector (12) and at least one lower reflector (13) which have been designed in such a way that they reflect the rays of light from the lamp (11) obliquely to the side, mainly onto plants located further away from the illuminator,
- the upper reflector (12) and lower reflector (13) of the greenhouse illuminator (10) are designed in such a way that, in an elevation view, they form parabolas opening to the sides, which reflect the rays of light (15) from the lamp (11) situated at the common focal point of both parabolas mainly to the sides at an angle (α) down from the horizontal, which angle is most advantageously approximately 15°,
- and that the lower reflector (13) of the greenhouse illuminator (10) has holes or apertures (17) which allow diffused light (15c) to pass through it to the area below the illuminator and to its surroundings.

2. A greenhouse illuminator (10) according to claim 1, **characterised in that** the upper reflector (12) of the greenhouse illuminator (10) is a satin-finished mirror.

3. A greenhouse illuminator (10) according to claim 1 or 2, **characterised in that** the lower reflector (13) of the greenhouse illuminator (10) is a silvered mirror.

4. A greenhouse illuminator (10) according to claim 1, 2 or 3, **characterised in that** the apertures (17c) on the outer edge of the lower reflector (13) are larger than the holes (17a) in the central part of the lower reflector near the lamp (11).

5. A greenhouse illuminator (10) according to one of the claims 1 to 4, **characterised in that** the greenhouse illuminator (10) has, on both sides of the lamp (11), side reflectors (14a and 14b), which reflect the rays of light (15d) directed to the side from the lamp to its opposite side, obliquely at a downward angle.

6. A greenhouse illuminator (10) according to one of the claims 1-5, **characterised in that** the upper reflector (12), lower reflector (13) and side reflectors (14a, 14b) of the greenhouse illuminator (10) are attached to the body (18) of the illuminator.

## Patentansprüche

1. Ein Gewächshausbeleuchter (10), der eine Birne oder Lampe (11) und wenigstens einen Reflektor (12, 13, 14) zum Reflektieren der Lichtstrahlen der Lampe schräg seitwärts, hauptsächlich auf weiter entfernt vom Beleuchter liegende Gewächse umfaßt, so daß die Gewächse unterhalb des Beleuchters möglichst gleichmäßig beleuchtet werden, **dadurch gekennzeichnet,daß**
- der Gewächshausbeleuchter (10) wenigstens einen unteren Reflektor (12) und wenigstens einen oberen Reflektor (13) umfaßt, die so gestaltet sind, daß sie die Lichtstrahlen der Lampe (11) schräg seitwärts, hauptsächlich auf weiter vom Beleuchter entfernt liegende Gewächse reflektieren,
- der obere Reflektor (12) und der untere Reflektor (13) des Gewächshausbeleuchters (10) so gestaltet sind, daß sie in vertikal geschnittener Ansicht sich seitlich öffnende Parabeln bilden, die die Lichtstrahlen (15) von der am gemeinsamen Brennpunkt der beiden Parabeln liegenden Lampe (11) hauptsächlich nach den Seiten in einem Winkel (α) nach unten von der Horizontalebene reflektieren, welcher Winkel am vorteilhaftesten ungefähr 15° beträgt,
- und daß der untere Reflektor (13) des Gewächshausbeleuchters (10) Löcher oder Öffnungen (17) hat, die durch sich Streulicht (15c) auf das unterhalb des Beleuchters befindliche Gebiet und seine Umgebung durchlassen.

2. Ein Gewächshausbeleuchter (10) gemäß Patentanspruch 1, **dadurch gekennzeichnet, daß** der obere Reflektor (12) des Gewächshausbeleuchters (10) ein satinbeschichteter Spiegel ist.

3. Ein Gewächshausbeleuchter (10) gemäß Patentanspruch 1, **dadurch gekennzeichnet, daß** der untere Reflektor (13) des Gewächshausbeleuchters (10) ein versilberter Spiegel ist.

4. Ein Gewächshausbeleuchter (10) gemäß Patentanspruch 1, 2 oder 3, **dadurch gekennzeichnet, daß** die an der äusseren Kante des unteren Reflektors (13) befindlichen Öffnungen (17c) grösser als die Löcher (17a) im zentralen Teil des unteren Reflektors in der nähe der Lampe (11) sind.

5. Ein Gewächshausbeleuchter (10) gemäß einem der Ansprüche 1 bis 4, **dadurch gekennzeichnet, daß** der Gewächshausbeleuchter (10) auf beiden Seiten der Lampe (11) Seitenreflektoren (14a und 14b) hat, die die seitlich von der Lampe gerichteten Lichtstrahlen (15d) nach der entgegengesetzten Seite der Lampe in einem schrägen Winkel nach unten reflektieren.

6. Ein Gewächshausbeleuchter (10) gemäß einem der Ansprüche 1-5, **dadurch gekennzeichnet, daß** der obere Reflektor (12), der untere Reflektor (13) und die Seitenreflektoren (14a, 14b) des Gewächshausbeleuchters (10) am Gehäuse (18) des Beleuchters befestigt sind.

## Revendications

1. Un illuminateur de serre (10), comportant une ampoule ou lampe (11) et au moins un réflecteur (12, 13, 14) pour réfléchir des rayons de lumière de la lampe obliquement vers le côté, principalement sur des plantes se trouvant plus loin de l'illuminateur, de façon à ce que les plantes se trouvant en dessous de l'illuminateur soient illuminées aussi uniformément que possible, **caractérisé en ce**
- **que** l'illuminateur de serre (10) a au moins un réflecteur supérieur (12) et au moins un réflecteur inférieur (13), conçus de façon à réfléchir les rayons de lumière de la lampe (11) obliquement vers le côté, principalement sur des plantes se trouvant plus loin de l'illuminateur,
- **que** le réflecteur supérieur (12) et le réflecteur inférieur (13) de l'illuminateur de serre (10) sont conçus de façon à ce que, dans une vue en élévation, ils forment des paraboles s'ouvrant sur les côtés et réfléchissant les rayons de lumière (15) de la lampe (11 ) se trouvant dans le point focal commun des deux paraboles, essentiellement vers les côtés, selon un angle (α) descendant par rapport a l'horizontale, cet angle étant le plus avantageusement d'environ 15°,
- et **que** le réflecteur inférieur (13) de l'illuminateur de serre (10) a des trous ou ouvertures (17) qui permettent à la lumière diffusée (15c) de le traverser pour passer dans l'aire se trouvant sous l'illuminateur et dans son entourage.

2. Un illuminateur de serre (10) selon la revendication 1, **caractérisé en ce que** le réflecteur supérieur (12) de l'illuminateur de serre (10) est un miroir fini satin.

3. Un illuminateur de serre (10) selon la revendication 1 ou 2, **caractérisé en ce que** le réflecteur inférieur (13) de l'illuminateur de serre (10) est un miroir argenté.

4. Un illuminateur de serre (10) selon la revendication 1, 2 ou 3, **caractérisé en ce que** les ouvertures (17c) se trouvant sur le bord extérieur du réflecteur inférieur (13) sont plus grandes que les trous (17a) se trouvant dans la partie centrale du réflecteur inférieur près de la lampe (11).

5. Un illuminateur de serre (10) selon l'une quelconque des revendications 1 à 4, **caractérisé en ce que** l'illuminateur de serre (10) a, des deux côtés de la lampe (11), des réflecteurs latéraux (14a et 14b) qui réfléchissent les rayons de lumière (15d) dirigés vers le côté, à partir de la lampe vers son côté opposé, ceci obliquement selon un angle descendant.

6. Un illuminateur de serre (10) selon l'une quelconque des revendications 1 à 5, **caractérisé en ce que** le réflecteur supérieur (12), le réflecteur inférieur (13) et les réflecteurs latéraux (14a, 14b) de l'illuminateur de serre (10) sont attachés sur le corps (18) de l'illuminateur.
